# EUROPÄISCHE PATENTSCHRIFT

(11) **EP 0 476 295 B1**
(45) Veröffentlichungstag und Bekanntmachung des Hinweises auf die Patenterteilung: **29.09.1993**
(21) Anmeldenummer: 91113373.4
(22) Anmeldetag: 09.08.1991
(51) Int. Cl.: F16L 55/162

(54) **Vorrichtung zum Auskleiden von Rohrleitungen mit einer Innenbeschichtung**
Device for lining a pipeline with an internal coating
Dispositif de revêtement d'une tuyauterie avec un revêtement interne

(30) Priorität: 17.08.1990 DE 4026116
(43) Veröffentlichungstag der Anmeldung: 25.03.1992
(73) Patentinhaber: Gerigk, Wolfgang, D-70178 Stuttgart (DE); Kühner, Uwe, D-70186 Stuttgart (DE)
(72) Erfinder: Schmidt, Rüdiger, W-7000 Stuttgart 1 (DE); Kühner, Uwe, W-7000 Stuttgart 1 (DE)
(74) Vertreter: Patentanwälte Bartels und Partner

(56) Entgegenhaltungen:
- WO-A-87/00906
- DE-A- 3 204 386
- DE-C- 3 147 396
- FR-A- 2 613 258
- US-A- 4 108 279

## Beschreibung

Die Erfindung betrifft eine Vorrichtung zum Auskleiden der inneren Wandfläche mindestens eines Abschnittes einer Rohrleitung mit einer Beschichtung aus einem selbstaushärtenden, dickflüssigen Beschichtungsstoff mit mindestens einem Auftragekörper, der zum Auftragen des Beschichtungsstoffes durch den Rohrabschnitt bewegt wird und den lichten Querschnitt des Rohrabschnitts bis auf einen Ringspalt ausfüllt, und mit mehreren Führungsstücken zum Führen des Auftragekörpers in einem ringförmigen Abstand von der inneren Wandfläche des Rohrabschnittes, wobei die Führungsstücke in der Umfangsrichtung der inneren Wandfläche zur Bildung von Durchlässen für den Beschichtungsstoff in Abständen voneinander angeordnet sind.

Bei einer bekannten Vorrichtung (DE-C-31 47 396) dieser Art wird das Auftragen des Beschichtungsstoffes auf die Rohrinnenwandung durch mindestens einen Auftragekörper bewirkt, der für die Ausbildung einer über den gesamten Umfang gleichmäßigen Schichtstärke mit mindestens einem vorlaufenden und einem nachlaufenden Führungskörper verbunden ist, welche Führungsstücke aufweisen, die dazu dienen, den Auftragekörper zur Bildung des Ringspaltes koaxial zur Rohrinnenwandung zu führen.

Der Auftragekörper und die Führungskörper sind auf einer Stange unter Verwendung von Unterlegscheiben und Distanzhülsen aufgeschoben und werden durch diese mittels am vorderen und hinteren Ende aufgeschraubter Muttern zusammengehalten.

Der Erfindung liegt die Aufgabe zugrunde, die bekannte Vorrichtung zu vereinfachen und zu verbessern.

Diese Aufgabe wird erfindungsgemäß durch die Merkmale des Patentanspruches 1 gelöst.

Dadurch, daß die Führungsstücke als Abstandshalter an der Oberfläche des Auftragekörpers ausgebildet sind, wird gegenüber dem Bekannten eine wesentlich vereinfachte Bauform erreicht, da die Beschichtung im äußersten Fall mit nur einem einzigen Körper, nämlich dem erfindungsgemäßen Auftragekörper durchführbar ist. Dieser kann eine den jeweiligen Anforderungen angepaßte beliebige, z.B. zylinderförmige Gestalt haben.

Gegenüber der bekannten Vorrichtung mit mindestens drei auf einer Stange aufgereihten Körpern ist die Verwendung der erfindungsgemäßen Vorrichtung nicht auf geradlinig verlaufende Rohrleitungen beschränkt, sondern kann sich durch entsprechende Gestaltung gekrümmten Rohrverläufen anpassen und durch solche aufgrund der Abstandshalter exakt koaxial zur Rohrinnenwandung geführt und hindurchbewegt werden.

Bei einer vorteilhaften Ausführungsform der Erfindung kann der Auftragekörper im wesentlichen kugelförmig ausgebildet sein. Um sich unterschiedlichen Durchmessern von Rohrinnenwandungen anpassen zu können, kann der Auftragekörper aus einem elastisch nachgiebigen Material bestehen und mit mindestens einem Hohlraum versehen sein. Jeder Hohlraum kann durch ein Ventil aufblasbar sein.

Die Abstandhalter an der Oberfläche des Auftragekörpers können als Rippen ausgebildet sein, die sich in gleichbleibender Höhe über der Oberfläche des kugelförmigen Körpers in Ebenen erstrecken, die sich im wesentlichen in einer ihnen gemeinsamen Geraden schneiden. Wird hierbei der Auftragekörper in Richtung dieser gemeinsamen Geraden durch den Rohrabschnitt bewegt, und schiebt er hierbei den dickflüssigen Beschichtungsstoff vor sich her, wird der Beschichtungsstoff gleichmäßig auf die Innenwandung des Rohrabschnittes unter Bildung von Rillen aufgetragen, wenn der dickflüssige Beschichtungsstoff den Innenquerschitt des Rohrabschnitts unmittelbar vor dem Auftragekörper ausfüllt.

Die Abstandhalter können aber auch anders als rippenförmig, z.B. als radial vorstehende Stifte, ausgebildet sein, wodurch bei einem Beschichtungsstoff mit geeigneter Viskosität die Rillenbildung in der Beschichtung verringert oder ganz vermieden werden kann, da dann die Möglichkeit besteht, daß sich die Beschichtung hinter den Stiften ohne Rippenbildung verbindet.

Bei einer weiteren vorteilhaften Ausführungsform der Erfindung kann ein dem Auftragekörper voreilender Verschlußkörper vorgesehen sein, der einen axialen Durchbruch für ein Zugmittel aufweist, das am Auftragekörper angreift. Hierbei kann der Verschlußkörper mit mindestens einem Hohlraum versehen sein, der durch ein Ventil aufblasbar ist. Dies schafft die Möglichkeit, daß der Verschlußkörper dem Innendurchmesser des Rohrabschnittes so angepaßt werden kann, daß er den Zwischenraum zwischen den beiden Körpern nach vorne hin ganz verschließt und mit Reibung an der Innenwandung des Rohres anliegt, so daß beim Durchziehen des Auftragekörpers der Beschichtungsstoff zwischen den beiden Körpern einem Druck ausgesetzt wird, durch den der Beschichtungsstoff in den Zwischenraum zwischen dem Auftragekörper und der Rohrinnenwandung gedrückt wird.

Es kann auch ein dem Verschlußkörper nacheilender Körper ohne Abstandhalter vorgesehen sein, der als Glättungskörper einen Durchmesser hat, dessen Länge zwischen den Durchmessern des Auftragekörpers mit und ohne Rippen liegt. Dadurch wird erreicht, daß beim Durchziehen des Auftragekörpers durch den Rohrabschnitt die vom Auftragekörper gebildete, durch Rillen unterbrochene Beschichtung vom Glättungskörper so zusammengedrückt wird, daß die Rillen geschlossen werden.

Bei einer weiteren Ausbildung der erfindungsgemäßen Vorrichtung ist zwischen dem Auftragekörper und dem Verschlußkörper mit dem Zugmittel mindestens ein im wesentlichen starrer Druckverteilungskörper verbunden, der dazu dient, eine örtliche Druckerhöhung zu verhindern, wie sie z.B. beim Auftragen eines Beschichtungsstoffes hoher Viskosität auftreten kann, weil sich der Druck nicht gleichmäßig über das ganze Volumen des aufgetragenen Beschichtungsstoffes verteilt. Hierdurch wird ein Aufreißen von z.B. bereits brüchig gewordenen Rohrabschnitten vermieden.

Als Beschichtungsstoff kann ein dickflüssiger, selbstaushärtender Stoff verwendet werden, dessen Viskosität so groß ist, daß der Stoff nach dem Zuführen an die Innenwandung des Rohrabschnittes und vor dem Aushärten nicht zum Fließen kommt, z.B. ein Epoxidharz. Durch Verwendung eines geeigneten Beschichtungsstoffes wird dabei nicht nur erreicht, daß der Rohrabschnitt nach außen abgedichtet wird, sondern wenn der Beschichtungsstoff nach dem Aushärten eine genügende Härte aufweist, kann dadurch auch die Festigkeit des Rohrabschnitts erhöht werden. Man hat dadurch die Möglichkeit, auch alte zerbrechliche Rohre durch die Beschichtung zu verfestigen.

Die Erfindung ist in der folgenden Beschreibung anhand der Zeichnung im einzelnen beschrieben.

Es zeigen:
- Fig. 1: einen schematisch vereinfacht dargestellten Schnitt durch ein Rohr mit einer Krümmung, durch das der mit Abstandhaltern versehene kugelförmige Auftragekörper mittels eines Seiles hindurchgezogen wird;
- Fig. 2: einen der Fig. 1 entsprechenden Schnitt, der eine Vorrichtung zeigt, die aus einem mit Abstandhaltern versehenen Auftragekörper zum Beschichten des Rohrabschnittes und einem Verschlußkörper besteht;
- Fig. 3: einen der Fig. 2 entsprechenden Schnitt, der eine Beschichtungsvorrichtung zeigt, die aus einem Verschlußkörper, einem Auftragekörper und einem Glättungskörper besteht;
- Fig. 4: einen Schnitt nach der Linie IV - IV in Fig. 3;
- Fig. 5: einen der Fig. 3 entsprechenden, vereinfachten Schnitt einer Vorrichtung, die neben den drei in Fig. 3 dargestellten kugelförmigen Körpern noch zwei weitere Druckverteilungskörper aufweist.

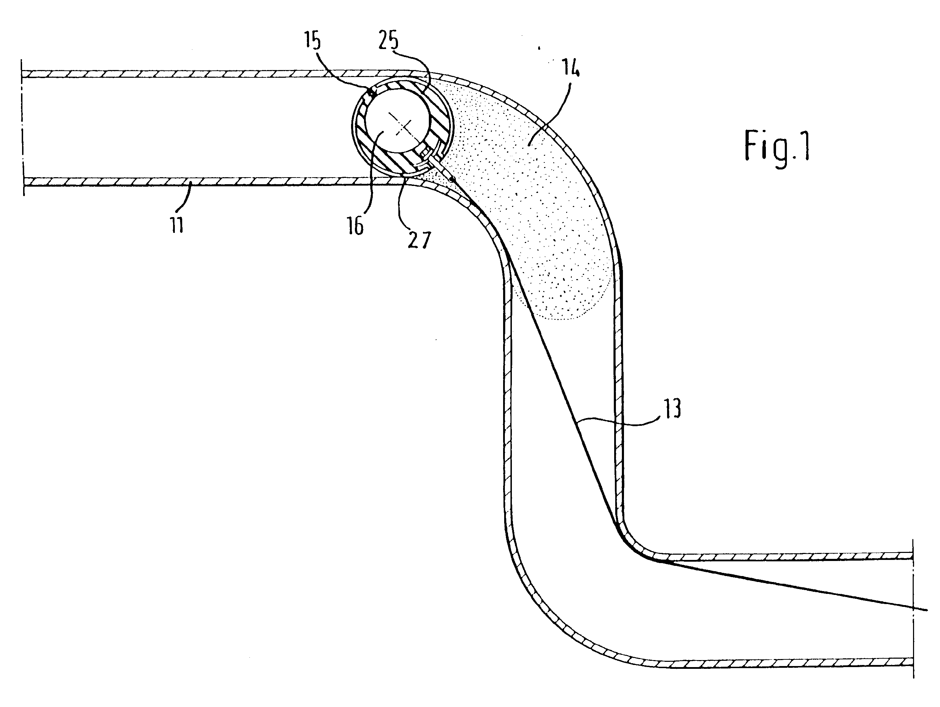

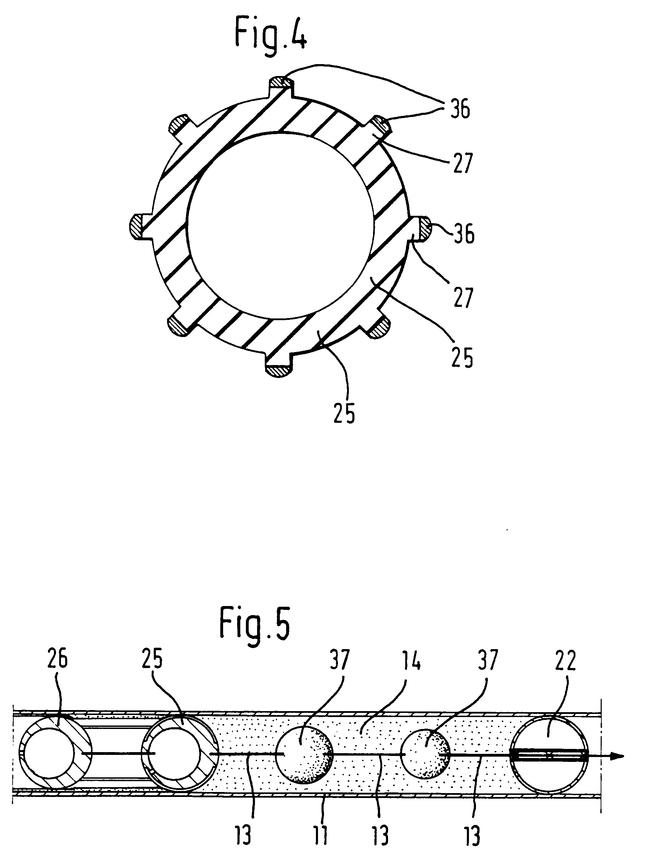

Das Grundprinzip des Verfahrens ist in Fig. 1 dargestellt. In einem mit zwei Krümmungen versehenen Rohrabschnitt 11 ist ein kugelförmiger Auftragekörper 25 angeordnet, an dem ein Zugmittel 13, z.B. ein Drahtseil, angreift, mittels dessen der Auftragekörper 25 durch den Rohrabschnitt in der in Fig. 1 von links nach rechts verlaufenden Zugrichtung hindurchgezogen werden kann. In der Zugrichtung vor dem Auftragekörper 25 ist eine Portion 14 eines dickflüssigen Beschichtungsstoffes angeordnet, der den lichten Querschnitt vor dem Auftragekörper 25 ausfüllt. Beim Durchziehen des kugelförmigen Auftragekörpers 25 wird der Beschichtungsstoff aus der Portion 14 in Risse der Innenwandung des Rohres gedrückt, so daß er dann nach dem Erhärten die Rohrwandung abdichtet. Damit der Auftragekörper 25 ohne Klemmung durch die Krümmungen des Rohrabschnittes 11 hindurchgeführt werden kann, ist er kugelförmig ausgebildet. Zur Anpassung an gegebenenfalls vorhandene Unebenheiten besteht der Auftragekörper 25 aus einem elastisch nachgiebigen Material, z.B. aus Gummi, und weist einen durch ein Ventil 15 aufblasbaren Hohlraum 16 auf. An seinem Umfang sind rippenförmige Abstandhalter 27 vorgesehen, die sich in immer gleichbleibender Höhe über der Oberfläche des kugelförmigen Auftragekörpers 25 längs Diametralebenen erstrecken, die sich in einem gemeinsamen Durchmesser 28 schneiden. Dieser Durchmesser 28 fällt mit einer durch die vorgesehene Zugrichtung definierten Bewegungsachse des Auftragekörpers 25 zusammen. Die Länge eines jeden Abstandhalters 27 erstreckt sich über einen fast 180° langen Bogen. Beim dargestellten Ausführungsbeispiel weist der Auftragekörper 25, wie das aus Fig. 4 ersichtlich ist, 8 Abstandhalter auf, durch die die kugelförmige Oberfläche des Auftragekörpers 25 in einem der Höhe der Abstandhalter entsprechenden Abstand von der Rohrinnenwandung gehalten wird.

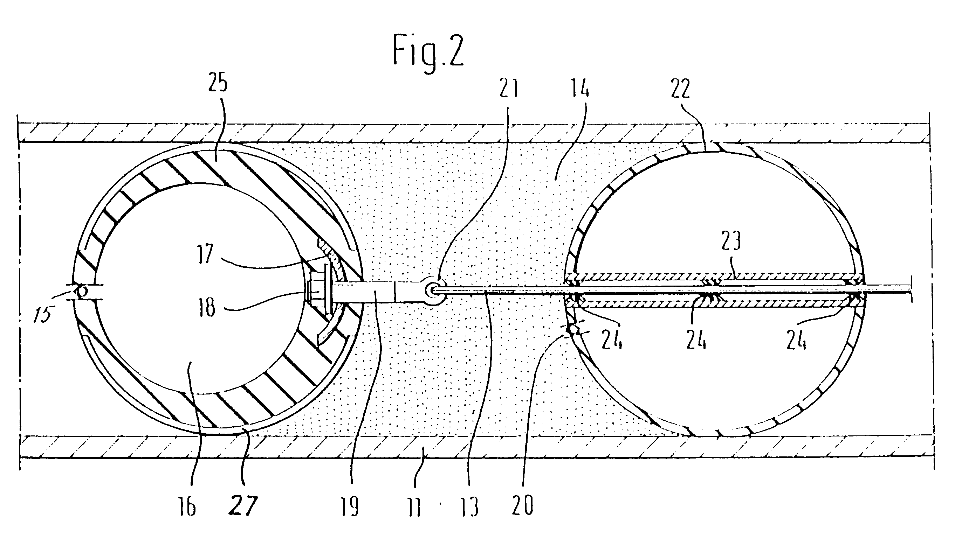

In Fig. 2 ist eine die Vorrichtung nach Fig. 1 weiter ausbildende Vorrichtung zum Abdichten der Wandung des Rohrabschnittes 11 dargestellt. Dieser Darstellung ist zu entnehmen, daß die Wand des kugelförmigen Auftragekörpers 25 wie das bereits aus Fig. 1 ersichtlich ist, eine in der Zugrichtung zunehmende Wandstärke aufweist, so daß im Bereich der größten Wandstärke eine harte Schale 17 aus Kunststoff oder Metall eingebettet werden kann, die mit einer Schraubenmutter 18 verbunden ist, in die ein Verbindungsstift 19 zum Verbinden des Zugmittels 13 mit dem Auftragekörper 25 einschraubbar ist. Zu diesem Zweck ist der Verbindungsstift 19 mit einer Öse 21 versehen.

In der in Fig. 2 nach rechts gerichteten Zugrichtung vor dem Auftragekörper 25ist ein ebenfalls aus einem elastisch nachgiebigen Material bestehender hohler Verschlußkörper 22 angeordnet, in dem ein diametral durchgehendes Führungsrohr 23 eingebettet ist, durch das das Zugmittel 13 hindurchgeführt ist. Der Hohlraum des Führungsrohres 23 ist durch Dichtungen 24 abgedichtet, so daß, wenn der Verschlußkörper 22 durch das in Fig. 2 dargestellte Ventil 20 genügend stark aufgepumpt ist, der Zwischenraum zwischen den beiden kugelförmigen Körpern 25 und 22 nach vorne hin durch den Verschlußkörper abgeschlossen ist.

Beim Anwenden der in Fig. 2 dargestellten Vorrichtung wird nacheinander das Zugmittel mit dem Verschlußkörper 22 und eine Portion 14 des Beschichtungsstoffes in den Anfang des Rohrabschnittes eingeführt. Anschließend wird dann der Auftragekörper 25 mittels des Zugmittels 13 in den Rohrabschnitt eingezogen, so daß er die Portion 14 des Dichtungsstoffes und über diesen den Verschlußkörper 22 vor sich herschiebt. Durch entsprechendes Aufpumpen des Verschlußkörpers 22 kann eine so große Reibung zwischen dem Verschlußkörper 22 und der Innenwandung des Rohrabschnittes 11 erreicht werden, daß der Dichtungsstoff der Portion 14 mit einem zum Abdichten erforderlichen Druck in den Zwischenraum zwischen dem Auftragekörper 25 und der Innenwandung des Rohrabschnittes 11 gedrückt wird.

Grundsätzlich eignen sich für das Auftragen solche Beschichtungsstoffe, deren Viskosität nicht zu groß ist. Sie soll aber nach dem Beschichten so groß sein, daß der Stoff nach dem Zuführen und vor dem Aushärten an der Innenwandung nicht zum Fließen kommt. Um diese Eigenschaft möglichst optimal zu erreichen, kann dem Beschichtungsstoff ein Thixotropiemittel beigemischt werden. Durch das Thixotropiemittel wird erreicht, daß die Viskosität des Beschichtungsstoffes beim Durchbewegen durch das Rohr und die dabei auftretende physikalische Belastung für das Auftragen verringert wird und der Beschichtungsstoff nach dem Auftragen sofort die gewünschte hohe Viskosität erreicht. Nach dem Aushärten des Beschichtungsstoffes verliert dann das Thixotropiemittel seine Wirkung.

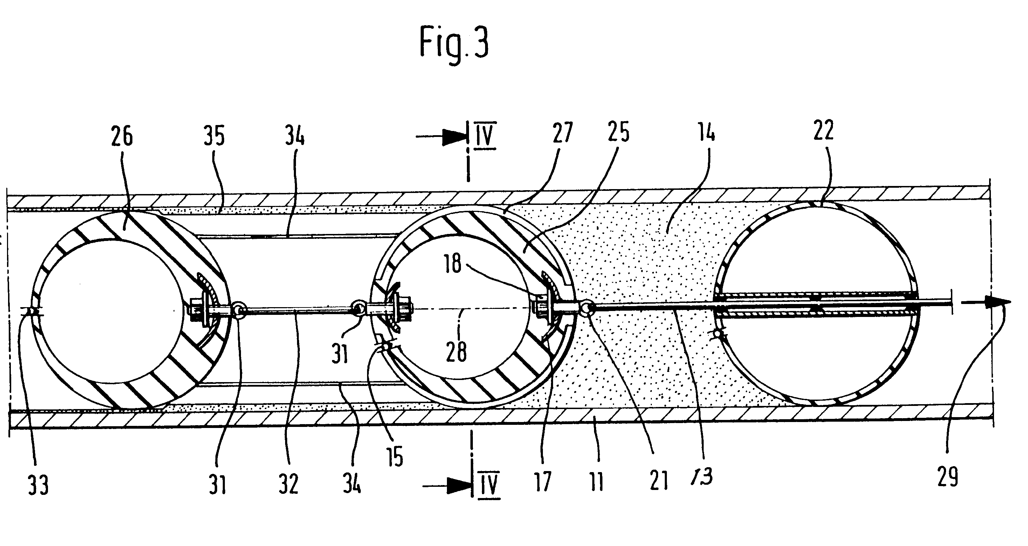

In den Fig. 3 und 4 ist ein weiteres Ausführungsbeispiel der erfindungsgemäßen Vorrichtung dargestellt, das zum Beschichten der Innenwandung des Rohrabschnittes 11 mit einem die Portion 14 bildenden Beschichtungsstoff dient. Diese Vorrichtung besteht aus dem im Zusammenhang mit Fig. 2 beschriebenen Verschlußkörper 22, dem Auftragekörper 25 und einem im wesentlichen kugelförmigen Glättungskörper 26.

In der in Fig. 3 durch einen Pfeil 29 angegebenen Zugrichtung zieht der Auftragekörper 25 den Glättungskörper 26 hinter sich her, der im wesentlichen so ausgebildet ist, wie der kugelförmige Auftragkörper 25, jedoch ohne Abstandhalter (27), wie der Verschlußkörper 22. Die Länge des Durchmessers dieses Glättungskörpers 26 liegt zwischen den Längen der Durchmesser des Auftragekörpers 25 mit und ohne Abstandhalter 27.

Sowohl am Auftragkörper 25 als auch am Glättungskörper 26 sind der Öse 21 entsprechende Ösen 31 in der gleichen Weise wie die Öse 21 befestigt, die durch ein Seil 32 miteinander verbunden sind.

Der ebenfalls aus einem nachgiebig elastischen Stoff bestehende Glättungskörper 26 ist ebenso wie der Auftragekörper 25 durch ein Ventil 33 aufblasbar.

Bei der Innenbeschichtung des Rohrabschnitts 11 mit der Vorrichtung nach Fig. 3 wird der Zwischenraum zwischen dem Verschlußkörper 22 und dem Auftragekörper 25 in der gleichen Weise wie bei der Fig. 2 mit einer Portion 14 eines Beschichtungsstoffes gefüllt. Dann wird der Auftragekörper ebenfalls in der gleichen Weise durch das Rohr hindurchgezogen, so daß der Beschichtungsstoff aus der Portion 14 in die Zwischenräume zwischen den Abstandhaltern 27 der kugelförmigen Oberfläche des Auftragekörpers 25 und der Innenwandung des Rohrabschnittes 11 gedrückt und dadurch die Rohrinnenwandung mit dem Beschichtungsstoff unter Freilassung von 8 Rillen beschichtet wird, von denen in Fig. 3 zwei Rillen in der Draufsicht und zwei Rillen im Schnitt dargestellt sind. Der Glättungskörper 26 ist auf einen solchen Durchmesser aufgepumpt, daß er die mit Rillen 34 versehene Beschichtung 35 in einem solchen Maße zusammendrückt, daß die Rillen 34 geschlossen werden. Wird hierbei die Portion 14 so bemessen, daß sie ausreicht, den Rohrabschnitt in der gewünschten Weise zu beschichten, dann ermöglicht diese Vorrichtung die Beschichtung der Innenwandung des Rohres mit einem Durchzug der Vorrichtung durch den Rohrabschnitt 11.

Die in Fig. 3 dargestellte Vorrichtung kann auch ohne Glättungskörper 26 verwendet werden. Dabei wird bei einem ersten Durchzug des Auftragekörpers 25 die Innenwandung des Rohrabschnittes 11 mit der mit Rillen 34 versehenen Beschichtung 35 mit ihrer endgültig vorgesehenen Dicke versehen. Nach dem Aushärten der Beschichtung wird dann ein dem Glättungskörper 26 entsprechender Auftragekörper ohne Abstandhalter mit der Vorrichtung nach Fig. 1 oder 2 durch den Rohrabschnitt 1 hindurchgezogen, bei dem der Durchmesser des Auftragekörpers dem lichten Durchmesser der mit Rillen versehenen Beschichtung 35 entspricht, so daß der Auftragekörper hier nur dazu dient, die Rillen 34 mit dem Beschichtungsstoff auszufüllen.

Da bei einer mehrmaligen Benutzung des Auftragekörpers 25 mit einer Abnutzung der rippenartigen Abstandhalter 27 zu rechnen ist, ist (s. Fig. 4) auf der Außenkante eines jeden Abstandhalters 27 eine Schiene 36 aus einem härteren Stoff, z.B. aus einem harten Kunststoff oder aus Metall lösbar, z.B. mittels Senkkopfschrauben, befestigt, so daß der eigentliche Auftragekörper 25 nicht vorzeitig abgenutzt wird.

In Fig. 5 ist ein weiteres abgewandeltes Ausführungsbeispiel dargestellt, das, wie die Vorrichtung nach Fig. 3 einen Verschlußkörper 22, einen Auftragekörper 25 und einen Glättungskörper 26 aufweist. Da zum Auftragen eines dickflüssigen Beschichtungsstoffes in dem sich der Druck nicht gleichmäßig über das ganze Volumen der Portion 14 verteilen kann, und für das Durchdrücken des hochviskosen Beschichtungsstoffes ein verhältnismäßig großer Druck erforderlich ist, könnte es zu einer örtlichen Druckerhöhung kommen, durch die z.B. ein älterer, bereits brüchig gewordener Rohrabschnitt aufgerissen werden könnte. Um eine solche örtliche Druckerhöhung zu vermeiden, sind bei dem Ausführungsbeispiel nach Fig. 5 zwischen dem Verschlußkörper 22 und dem Auftragekörper 25 zwei aus einem harten Werkstoff, z.B. aus Stahl bestehende Druckverteilungskugeln 37 angeordnet.

Die Zugkraft zum Durchziehen der in den Fig. 1 bis 5 beschriebenen Vorrichtungen durch den Rohrabschnitt 11 kann durch eine außerhalb des Rohrabschnittes befindliche Seilwinde oder dergleichen erzeugt werden. Es kann aber auch ein sich im Rohr fortbewegender Roboter verwendet werden, der die genannten Vorrichtungen mittels des Zugmittels 13 durch den zu behandelnden Rohrabschnitt zieht. Man könnte aber auch den in der Bewegungsrichtung hintersten Körper vorschieben. Im letztgenannten Fall müßten die Verbindungen zwischen den Körpern der Schubkraft angepaßt sein. Zur Verbindung des Auftragekörpers 25 mit dem Glättungskörper 26 kann anstelle des Verbindungsseiles 32 auch ein Kugel- oder Kardangelenk vorgesehen sein.

Die Abstandhalter 27 können bei einem weiteren, nicht dargestellten Ausführungsbeispiel anders als rippenförmig, z.B. als radial vorstehende Stifte, ausgebildet sein, wodurch bei einem Beschichtungsstoff mit geeigneter Viskosität die Rillenbildung in der Beschichtung verringert oder ganz vermieden werden kann, da dann die Möglichkeit besteht, daß hinter den Stiften die Beschichtung ohne Rippenbildung zusammenfließt.

## Patentansprüche

1. Vorrichtung zum Auskleiden der inneren Wandfläche mindestens eines Abschnittes einer Rohrleitung mit einer Beschichtung aus einem selbstaushärtenden, dickflüssigen Beschichtungsstoff
- mit mindestens einem Auftragekörper (25), der zum Auftragen des Beschichtungsstoffs durch den Rohrabschnitt bewegt wird und den lichten Querschnitt des Rohrabschnitts bis auf einen Ringspalt ausfüllt, und
- mit mehreren Führungsstücken zum Führen des Auftragekörpers (25) in einem ringförmigen Abstand von der inneren Wandfläche des Rohrabschnittes,
- wobei die Führungsstücke in der Umfangsrichtung der inneren Wandfläche zur Bildung von Durchlässen für den Beschichtungsstoff in Abständen voneinander angeordnet sind,
dadurch gekennzeichnet,
daß die Führungsstücke als Abstandhalter (27) an der zum Auftragen bestimmten Oberfläche des Auftragekörpers (25) ausgebildet sind.

2. Vorrichtung nach Anspruch 1, dadurch gekennzeichnet, daß der Auftragekörper (25) im wesentlichen kugelförmig ist.

3. Vorrichtung nach Anspruch 1 oder 2, dadurch gekennzeichnet,
- daß der Auftragekörper (25) aus einem elastisch nachgiebigen Material besteht und mit mindestens einem Hohlraum (16) versehen ist und
- daß jeder Hohlraum (16) durch ein Ventil (15) aufblasbar ist.

4. Vorrichtung nach einem der Ansprüche 1 bis 3, dadurch gekennzeichnet,
- daß die Abstandhalter (27) als Rippen ausgebildet sind, die sich in gleichbleibender Höhe über der der Rohrinnenwandung zugekehrten Oberfläche des Auftragekörpers (25) in Ebenen erstrecken, die sich im wesentlichen in einer ihnen gemeinsamen Geraden schneiden, die mit der vorgesehenen Bewegungsachse (28) des Auftragekörpers (25) zusammenfällt.

5. Vorrichtung nach Anspruch 4, dadurch gekennzeichnet, daß auf der Außenkante eines jeden Abstandhalters (27) eine auswechselbare Schiene (36) befestigt ist.

6. Vorrichtung nach einem der Ansprüche 1 bis 5, dadurch gekennzeichnet,
- daß dem Auftragekörper (25) ein ihm vorauseilender Verschlußkörper (22) zugeordnet ist, der den lichten Querschnitt des Rohrabschnittes im wesentlichen ausfüllt, und
- daß der Verschlußkörper (22) einen axialen Durchbruch (23) für ein Zugmittel (13) aufweist, das am Auftragekörper (25) angreift.

7. Vorrichtung nach Anspruch 6, dadurch gekennzeichnet, daß der Verschlußkörper (22) kugelförmig ist.

8. Vorrichtung nach Anspruch 6 oder 7, dadurch gekennzeichnet,
- daß der Verschlußkörper (22) mit mindestens einem Hohlraum versehen ist, und
- daß der Hohlraum durch ein Ventil (20) aufblasbar ist.

9. Vorrichtung nach einem der Ansprüche 6 bis 8, dadurch gekennzeichnet, daß zum Verschließen des axialen Durchbruchs (23) mittels des Zugmittels (13) im Durchbruch mit dem Zugmittel (13) zusammenwirkende Dichtungen (24) vorhanden sind.

10. Vorrichtung nach einem der Ansprüche 1 bis 9, dadurch gekennzeichnet, daß mit dem Auftragekörper (25) ein diesem in Bezug auf die vorgesehene Bewegungsrichtung nacheilender Glättungskörper (26) verbunden ist, dessen Querschnitt zwischen den Querschnitten des Auftragekörpers (25) mit und ohne Abstandhaltern (27) liegt.

11. Vorrichtung nach Anspruch 11, dadurch gekennzeichnet, daß der Glättungskörper (26) kugelförmig ist.

12. Vorrichtung nach Anspruch 10 oder 11, dadurch gekennzeichnet, daß
- der Glättungskörper (26) aus einem elastisch nachgiebigen Material besteht und mit mindestens einem Hohlraum versehen ist, und
- daß der Hohlraum durch ein Ventil (33) aufblasbar ist.

13. Vorrichtung nach einem der Ansprüche 10 bis 12, dadurch gekennzeichnet, daß die Verbindung (32) zwischen dem Auftragekörper (25) und dem Glättungskörper (26) flexibel ist.

14. Vorrichtung nach einem der Ansprüche 10 bis 13, dadurch gekennzeichnet, daß die Verbindung zwischen dem Auftragekörper (25) und dem Glättungskörper (26) ein Kardan- oder Kugelgelenk aufweist.

15. Vorrichtung nach einem der Ansprüche 6 bis 9, dadurch gekennzeichnet, daß mit dem Zugmittel (13) zwischen dem Auftragekörper (25) und dem Verschlußkörper (22) mindestens ein im wesentlichen starrer Druckverteilungskörper (37) verbunden ist, dessen senkrecht zur vorgesehenen Bewegungsrichtung verlaufender Querschnitt kleiner ist als der entsprechende Querschnitt des Auftragekörpers (25).

16. Vorrichtung nach Anspruch 15, dadurch gekennzeichnet, daß der Druckverteilungskörper (37) eine vorzugsweise aus Stahl bestehende Kugel ist.

## Claims

1. Device for lining the inner wall surface of at least one section of a pipeline with a coating consisting of a self-hardening viscous coating material and having at least one coating member (25) which is moved through the pipe section in order to coat the coating material and fills the internal cross-section of the pipe section apart from an annular gap, and having a plurality of guide portions for guiding the coating member (25) at an annular distance from the inner wall surface of the pipe section, wherein the guide portions are disposed at distances from one another in the peripheral direction of the inner wall surface in order to form openings for the coating material, characterised in that the guide portions are in the form of spacers (27) on the surface of the coating member (25) intended for coating.

2. Device according to Claim 1, characterised in that the coating member (25) is substantially spherical.

3. Device according to Claim 1 or 2, characterised in that the coating member (25) consists of a resiliently flexible material and is provided with at least one cavity (16); and in that each cavity (16) can be inflated by a valve (15).

4. Device according to any one of Claims 1 to 3, characterised in that the spacers (27) are in the form of ribs which extend in planes at a uniform height over the surface of the coating member (25) facing the inner wall of the pipe, the planes intersecting substantially in a straight line which is common thereto and which coincides with the intended axis of movement (28) of the coating member (25).

5. Device according to Claim 4, characterised in that a replaceable rail (36) is secured on the outer edge of each spacer (27).

6. Device according to any one of Claims 1 to 5, characterised in that there is associated with the coating member (25) a closure member (22) which leads out the latter and which substantially fills the internal cross-section of the pipe section; and in that the closure member (22) comprises an axial bore (23) for a tension means (13) which acts on the coating member (25).

7. Device according to Claim 6, characterised in that the closure member (22) is spherical.

8. Device according to Claim 6 or 7, characterised in that the closure member (22) is provided with at least one cavity; and in that the cavity can be inflated by a valve (20).

9. Device according to any one of Claims 6 to 8, characterised in that seals (24) which cooperate with the tension means (13) are provided in the axial bore (23) for closing the latter by means of the tension means (13).

10. Device according to any one of Claims 1 to 9, characterised in that there is connected to the coating member (25) a smoothing member (26) which retards the coating member relative to the intended direction of movement and of which the cross-section lies between the cross-sections of the coating member (25) with and without spacers (27).

11. Device according to Claim 10, characterised in that the smoothing member (26) is spherical.

12. Device according to Claim 10 or 11, characterised in that the smoothing member (26) consists of a resiliently flexible material and is provided with at least one cavity; and in that the cavity can be inflated by a valve (33).

13. Device according to any one of Claims 10 to 12, characterised in that the connection (32) between the coating member (25) and the smoothing member (26) is flexible.

14. Device according to any one of Claims 10 to 13, characterised in that the connection between the coating member (25) and the smoothing member (26) comprises a universal or ball-and-socket joint.

15. Device according to any one of Claims 6 to 9, characterised in that at least one substantially rigid pressure distribution member (37), of which the cross-section extending at right angles to the intended direction of movement is smaller than the corresponding cross-section of the coating member (25), is connected to the tension means (13) between the coating member (25) and the closure member (22).

16. Device according to Claim 15, characterised in that the pressure distribution member (37) is a ball preferably made of steel.

## Revendications

1. Dispositif de revêtement de la surface de la paroi interne d'au moins une partie d'une canalisation tubulaire avec un revêtement fait d'une matière de revêtement visqueuse auto-durcissante
- avec au moins un dispositif de revêtement (25), que l'on déplace pour déposer la matière de revêtement à travers la partie de tuyau et qui remplit la section libre de la partie de tuyauterie jusqu'à une chambre annulaire ; et
- avec plusieurs pièces de guidage pour guider le dispositif d'application (25) avec un intervalle annulaire par rapport à la paroi interne de la partie de tuyauterie,
- où les éléments de guidage sont disposés dans la direction entourant la surface de paroi interne pour former des espaces pour la matière de revêtement selon certains intervalles,
caractérisé en ce que les éléments de guidage sont formés en tasseaux (27) pour le revêtement de certaines surfaces déterminées avec le dispositif d'application (25).

2. Dispositif selon la revendication 1, caractérisé en ce que le dispositif d'application (25) est sensiblement sphérique.

3. Dispositif selon la revendication 1 ou 2, caractérisé
- en ce que le dispositif d'application (25) est composé d'une matière flexible élastique et est muni d'au moins un espace creux (16) et
- en ce que chaque espace creux (16) peut être balayé par une soupape (15).

4. Dispositif selon l'une quelconque des revendications 1 à 3, caractérisé
- en ce que les tasseaux (27) ont une forme de nervures, qui s'étendent à une hauteur égale au-dessus de la surface dirigée vers la paroi interne au-dessus de la surface du dispositif d'application (25) dirigée vers la paroi interne du tuyau dans des plans qui se coupent sensiblement selon une droite qui leur est commune, qui coincide avec l'axe de déplacement prévu (28) du dispositif d'application (25).

5. Dispositif selon la revendication 4, caractérisé en ce qu'une baguette interchangeable (36) est fixée au bord externe de chaque tasseau (27).

6. Dispositif selon l'une des revendications 1 à 5, caractérisé
- en ce qu'au dispositif d'application (25) est adjoint un corps de fermeture (22) défendu vers l'avant, qui remplit pour l'essentiel la section libre de la partie de tuyauterie, et
- en ce que le corps de fermeture (22) présente un percement axial (23) pour moyen de traction (13) qui prend sur le dispositif d'application (25).

7. Dispositif selon la revendication 6, caractérisé en ce que le corps de fermeture (22) est sphérique.

8. Dispositif selon la revendication 6 ou 7, caractérisé
- en ce que le corps de fermeture (22) est muni d'au moins un espace creux, et
- en ce que l'espace creux est balayable par une soupape (20).

9. Dispositif selon l'une des revendications 6 à 8, caractérisé en ce que pour la fermeture du percement axial (23) au moyen du dispositif de traction (13), sont présents des joints (24) coopérant avec le moyen de traction (13) en communication avec lui.

10. Dispositif selon l'une des revendications 1 à 9, caractérisé en ce qu'au dispositif d'application (25) est relié un corps de lissage (26) qui vient après lui dans la direction de déplacement prévue et dont la section est comprise entre les sections du dispositif d'application (25) avec et sans tasseaux (27).

11. Dispositif selon la revendication 10, caractérisé en ce que le corps de lissage (26) est sphérique.

12. Dispositif selon la revendication 10 ou 11, caractérisé en ce que
- le corps de lissage (26) se compose d'une matière souple élastique et est muni d'au moins un espace creux et
- en ce que l'espace creux est balayable par une soupape (33).

13. Dispositif selon l'une des revendications 10 à 12, caractérisé en ce que la liaison (32) entre le dispositif d'application 25 et le corps de lissage (26) est flexible.

14. Dispositif selon l'une des revendications 10 à 13, caractérisé en ce que la liaison entre le dispositif d'application (25) et le corps de lissage (26) présente une articulation à cardan ou sphérique.

15. Dispositif selon l'une des revendications 6 à 9, caractérisé en ce qu'au moyen de traction (13) entre le dispositif d'application (25) et le corps de fermeture (22) est fixé au moins un corps de répartition de la pression (37) sensiblement rigide, dont la section perpendiculaire à la direction de mouvement prévue est plus petite que la section correspondante de l'élément du dispositif d'application (25).

16. Dispositif selon la revendication 15, caractérisé en ce que l'élément de répartition de la pression (37) est une bille constituée pour l'essentiel d'acier.
